# EUROPEAN PATENT SPECIFICATION

(11) **EP 1 076 275 B1**
(45) Date of publication and mention of the grant of the patent: **20.10.2004**
(21) Application number: 00117058.8
(22) Date of filing: 09.08.2000
(51) Int. Cl.: G05B 19/418, G06F 9/46

(54) **Distributed real-time operating system**
Verteiltes Echtzeitbetriebssystem
Système d'exploitation en temps réel réparti

(30) Priority: 30.09.1999 US 410159; 12.08.1999 US 148541 P
(43) Date of publication of application: 14.02.2001
(73) Proprietor: Rockwell Technologies, LLC, Thousand Oaks, CA 91360 (US)
(72) Inventor: Balasubramanian, Sivaram, Mayfield Heights, Ohio 44124 (US)
(74) Representative: Lippert, Hans, Dipl.-Ing.

(56) References cited:
- US-A- 5 628 013
- US-A- 5 838 968
- US-A- 5 896 289
- KRITHI RAMAMRITHAM ET AL: "EFFICIENT SCHEDULING ALGORITHMS FOR REAL-TIME MULTIPROCESSOR SYSTEMS" IEEE TRANSACTIONS ON PARALLEL AND DISTRIBUTED SYSTEMS, IEEE INC, NEW YORK, US, vol. 1, no. 2, 1 April 1990 (1990-04-01), pages 184-194, XP000133930 ISSN: 1045-9219
- CHUNG M S ET AL: "Requirements specification of distributed hard real-time operating systems" PROCEEDINGS OF THE INTERNATIONAL CONFERENCE ON INDUSTRIAL ELECTRONICS,CONTROL AND INSTRUMENTATION (IECON). KOBE, OCT. 28 - NOV. 1, 1991, NES YORK, IEEE, US, vol. 1 CONF. 17, 28 October 1991 (1991-10-28), pages 1367-1371, XP010042009 ISBN: 0-87942-688-8
- HOWES N R ET AL: "The peer tasking design method" PARALLEL AND DISTRIBUTED REAL-TIME SYSTEMS, 1995. PROCEEDINGS OF THE THIRD WORKSHOP ON SANTA BARBARA, CA, USA 25 APRIL 1995, LOS ALAMITOS, CA, USA,IEEE COMPUT. SOC, 1995, pages 20-29, XP010148098 ISBN: 0-8186-7099-1

## Description

### BACKGROUND OF THE INVENTION

The present invention relates to industrial controllers for controlling industrial processes and equipment and more generally to an operating system suitable for a distributed industrial control system having multiple processing nodes spatially separated about a factory or the like.

Industrial controllers are special purpose computers used for controlling industrial processes and manufacturing equipment. Under the direction of a stored control program the industrial controller examines a series of inputs reflecting the status of the controlled process and in response, adjusts a series of outputs controlling the industrial process. The inputs and outputs may be binary, that is on or off, or analog providing a value within a continuous range of values.

Centralized industrial controllers may receive electrical inputs from the controlled process through remote input/output (I/O) modules communicating with the industrial controller over a high-speed communication network. Outputs generated by the industrial controller are likewise transmitted over the network to the I/O circuits to be communicated to the controlled equipment. The network provides a simplified means of communicating signals over a factory environment without multiple wires and the attendant cost of installation.

Effective real-time control is provided by executing the control program repeatedly in high speed "scan" cycles. During each scan cycle each input is read and new outputs are computed. Together with the high-speed communications network, this ensures the response of the control program to changes in the inputs and its generation of outputs will be rapid. All information is dealt with centrally by a well-characterized processor and communicated over a known communication network to yield predictable delay times, critical to deterministic control.

The centralized industrial controller architecture, however, is not readily scalable and with foreseeably large and complex control problems, unacceptable delays will result from the large amount of data that must be communicated to a central location and the demands placed on the centralized processor. For this reason it may be desirable to adopt a distributed control architecture in which multiple processors perform portions of the control program at spatially separate locations about the factory. By distributing the control, multiple processors may be brought to bear on the control problem reducing the burden on any individual processor and the amount of input and output data that must be transmitted.

Unfortunately the distributed control model is not as well characterized as far as guaranteeing performance of the controlled process as is required for real-time control. Delay in the execution of a portion of the control program by one processor can be fatal to successful real-time control and because the demand for individual processor resources fluctuates the potential for an unexpected overloading of a single processor is possible. This is particularly true when a number of different and independent applications programs are executed on the distributed controller where the application programs compete for the same set of physical hardware resources.

US-A-5 838 968 discloses a system and method for dynamic resource management across tasks in a real-time operating system. Regarding the features of claim 1, the following features can be derived from US-A-5 838 968: an application list indicating control application programs and control hardware resources required by the control application programs; a resource list indicating control hardware resources and their allocation among control application programs; a commitment program executing to receive a new control application program; identification of control hardware resources from the resource list matching control hardware resources required by the new control application program; and enrolling the new application program on the application list if the control hardware resources required by the new application program are available and otherwise reporting an error. Furthermore, US-A-5 838 968 states that real time systems are characterized by limited resources as well as time criticality of operations so that programmers are faced with resource limitations as well as time criticality constraints.

In CHUNG M S ET AL: ' Requirements specification of distributed hard real-time operating systems' PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1991, NES YORK, IEEE, US, vol. 1 CONF. 17, 28 October 1991 (1991-10-28), pages 1367-1371, XP010042009 ISBN: 0-87942-688-8, the functional requirements of task management and communication management are outlined the latter one requiring a static allocation of communication channel resources.

The article of KRITHI RAMAMRITHAM ET AL: 'EFFICIENT SCHEDULING ALGORITHMS FOR REAL-TIME MULTIPROCESSOR SYSTEMS' IEEE TRANSACTIONS ON PARALLEL AND DISTRIBUTED SYSTEMS, IEEE INC, NEW YORK, US, vol. 1, no. 2, 1 April 1990 (1190-04-01), pages 184-194, XP000133930 ISSN: 1045-9219, takes into consideration whether a new task plus all previously guaranteed tasks on a system's node can be scheduled to complete before the deadlines. In other words, it is checked whether a new application program can be handled on a specific processing node together with previously guaranteed application programs within given timing constraints. A distributed system with a plurality of nodes with own processors and memories is not taken into consideration in this respect. According to this article, a shared memory is used and a task that is not guaranteed at one node, is sent to another node and it is separately tested at each node whether a new task can be guaranteed at the node or not. An alternative embodiment of distributed memories is merely mentioned, however not "studied" or further explained.

The subject matter of claim 1 of the present application provides an improved operating system for distributed real-time industrial control that ensures deterministic execution of multiple independent application programs. To do so the operating system pre-allocates hardware resources to each application by seeking a commitment from those hardware resources that they will meet specified timing constraints. The hardware resources determine whether they can meet the timing constraints by modeling the execution of the application together with the other applications. Generally, the commitments are initially based on worst case assumptions which are later modified by actual statistics of the process during its execution.

Specifically the present invention according to claim 1 provides a real-time operating system for use with a control system having spatially separated hardware resources arranged in a topology. The operating system includes an application list indicating control application programs to be executed together with a required completion time and control hardware resources required by the control application programs. A resource list indicates control hardware resources and their allocation among control application programs. An allocation program preceding a commitment program portion of the operating system receives new control application programs and identifies control hardware resources from the resource list matching control hardware resources required by the new control application program. The allocation program then allocates a portion of the required completion time to each identified hardware resource and the commitment program models execution of the new control application program with the other control application programs on the application list to ensure that allocated completion time for each hardware resource is met. The new control application program is enrolled on the application list if the completion time constraint is met and otherwise an error is reported. The resource list is updated.

The invention provides a deterministic control environment with distributed hardware found in a distributed control system. By preallocating all hardware resources based on completion times for the application programs, acceptable response times are ensured.

The commitment program may model the execution of a control application program based on pre-determined pattern of repeated execution of the new application. During running of the control application program the commitment program may collect statistics on bandwidth usage and arrival time to modify the pre-determined pattern of repeated execution to better optimize use of hardware resources.

Thus it is another object of the invention to allow conservative but certain allocation of hardware resources which may later be improved based on actual statistics of resource use by the application program.

The hardware resources may be shared by scheduling and the resource list may include a schedule of use of the hardware resources by control application programs and the commitment program may model the schedules of the control application programs.

Thus it is another object of the invention to allow allocation of control application programs to share hardware resources such as networks which can be partitioned only in time through a scheduling system.

The modeling of the execution of a control application program with the other control application programs for each hardware resource may occur at the spatial location of the hardware resource.

Thus it is another object of the invention to provide each hardware resource with its own modeling capability so that a control system may be freely constructed of different hardware resources and yet be used with the distributed operating system.

The distributed operating system may include a network topology map indicating the topology of interconnections of the control hardware resources. Upon receiving a new control application program, "primary" control hardware resources may be identified matching the hardware resources required by the new control application program and "implicit" control hardware resources may be identified based on necessary intercommunications between identified primary control hardware resources per the network topology.

Thus it is another object of the invention to provide for deterministic operation of those hardware resources required principally to support the distributed nature of the control system, for example, hardware resources that provide intercommunication between other hardware resources sharing the principal execution of the control application program. Such implicit resources are not solely dependent on the application program but also depend upon the allocation by the commitment program of the control application program to the various hardware resources.

The foregoing and other objects and advantages of the invention will appear from the following description. In the description, reference is made to the accompanying drawings which form a part hereof and in which there is shown by way of illustration a preferred embodiment of the invention.

### BRIEF DESCRIPTION OF THE SEVERAL VIEWS OF THE DRAWINGS

Fig. 1 is a simplified diagram of a distributed control system employing two end nodes and an intervening communication node and showing the processor, memory and communication resources for each node;
Fig. 2 is a block diagram showing the memory resources of each node of Fig. 1 as allocated to a distributed real-time operating system and different application programs;
Fig. 3 is an expanded block diagram of the distributed operating system of Fig. 2 such as includes an application list listing application programs to be executed by the distributed control system, a topology showing the topology of the connection of the hardware resources of the nodes of Fig. 1, a resource list detailing the allocation of the hardware resources to the application program and the statistics of their use by each of the application programs, and the executable distributed real-time operating system code;
Fig. 4 is a pictorial representation of a simplified application program attached to its high-level requirements;
Fig. 5 is a flow chart of the operation of the distributed real-time operating system code of Fig. 3 showing steps upon accepting a new application program to determine the low-level hardware resource requirements and to seek commitments from those hardware resources for the requirements of the new application program;
Fig. 6 is a detailed version of the flow chart of Fig. 5 showing the process of allocating low-level requirements to hardware resources; and
Fig. 7 is a block diagram detailing the step of flow chart of Fig. 5 of responding to requests for commitment of hardware resources.

### DETAILED DESCRIPTION OF THE INVENTION

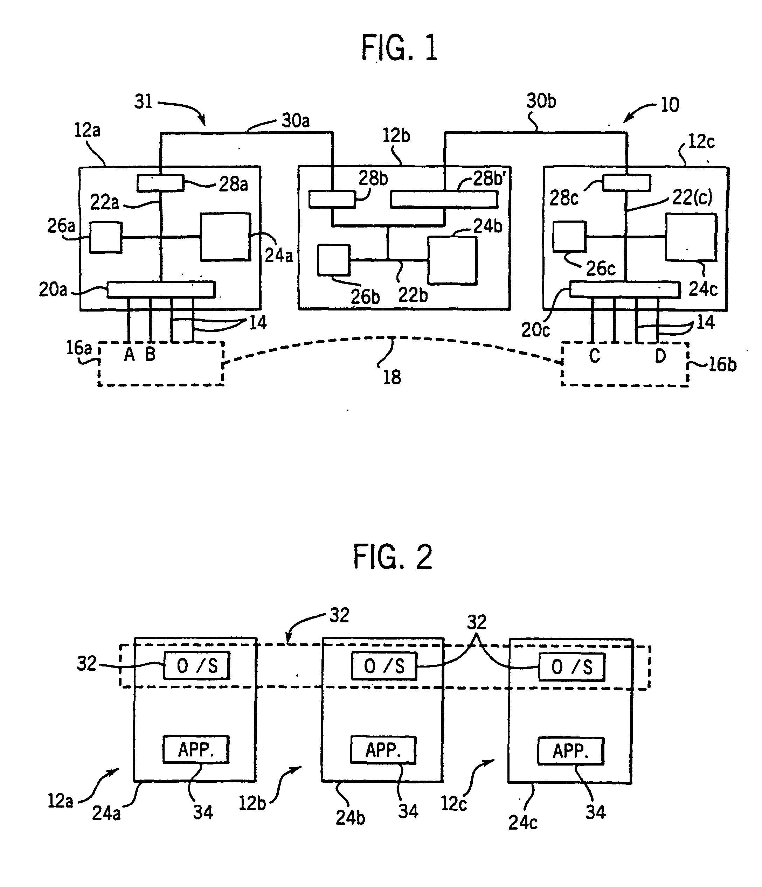

Referring now to Fig. 1, a distributed control system 10 includes multiple nodes 12a, 12b and 12c for executing a control program comprised of multiple applications. Control end nodes 12a and 12c include signal lines 14 communicating between the end nodes 12a and 12c and a portion of a controlled process 16a and 16b. Controlled process portions 16a and 16b may communicate by a physical process flow or other paths of communication indicated generally as dotted line 18.

In the present example, end node 12a may receive signals A and B from process 16a, and end node 12c may receive signal C from process 16b and provide as an output signal D to process 16b as part of a generalized control strategy.

End nodes 12a and 12c include interface circuitry 20a and 20c respectively communicating signals on signal lines 14 to internal buses 22a and 22c respectively. The internal buses 22a and 22c may communicate with the hardware resources of memory 24a, processor 26a and communications card 28a (for end node 12a) and memory 24c, processor 26c, and network communication card 28c for end node 12c. Network card 28a may communicate via network media 30a to a network card 28b on node 12b which may communicate via internal bus 22b to memory 24b and processor 26b and to second network communication card 28b' connected to media 30b which in turn communicates with network card 28c.

Generally during operation of distributed control system application programs are allocated between memories 24a, 24b and 24c to be executed on the respective nodes 12a, 12b and 12c with communications as necessary over links 30a and 30b. In an example control task it may desired to produce signal D upon the logical conjunction of signals A, B and C. In such a control task, a program in memory 24a would monitor signals A and B and send a message indicating both were true, or in this example send a message indicating the state of signals A and B to node 12c via a path through communication cards 28a, 28b, 28b' and 28c.

A portion of the application program executed by processor 26c residing in memory 24c would detect the state of input C and compare it with the state of signals A and B in the received message to produce output signal D.

The proper execution of this simple distributed application program requires not only the allocation of the application program portions to the necessary nodes 12a, 12b and 12c, but prompt and reliable execution of those programs the latter which requires the hardware resources of memory, processor, and communication networks 28a, 30a, 28b, 28b' 30b and 28c.

Referring now to Fig. 2, for this latter purpose the distributed real-time operating system 32 of the present invention may be used such as may be centrally located in one node 12 or in keeping with distributed nature of the control system distributed among the nodes 12a, 12b and 12c. In the latter case, the portions of the operating system 32 are stored in each of the memories 24a, 24b and 24c and intercommunicate to operate as single system. The operating system 32 provides multi-tasking in which multiple tasks including system tasks and application programs may be run in concurrent execution threads as is generally understood in the art.

In the preferred embodiment a portion of the operating system 32 that provides a modeling of the hardware resources (as will be described) is located in the particular node 12a, 12b and 12c associated with those hardware resources. Thus, hardware resource of memory 24a in node 12a would be modeled by a portion of the operating system 32 held in memory 24a.

In addition to portions of the operating system 32, memory 24a, 24b and 24c include various application programs 34 or portions of those programs 34 as may be allocated to their respective nodes.

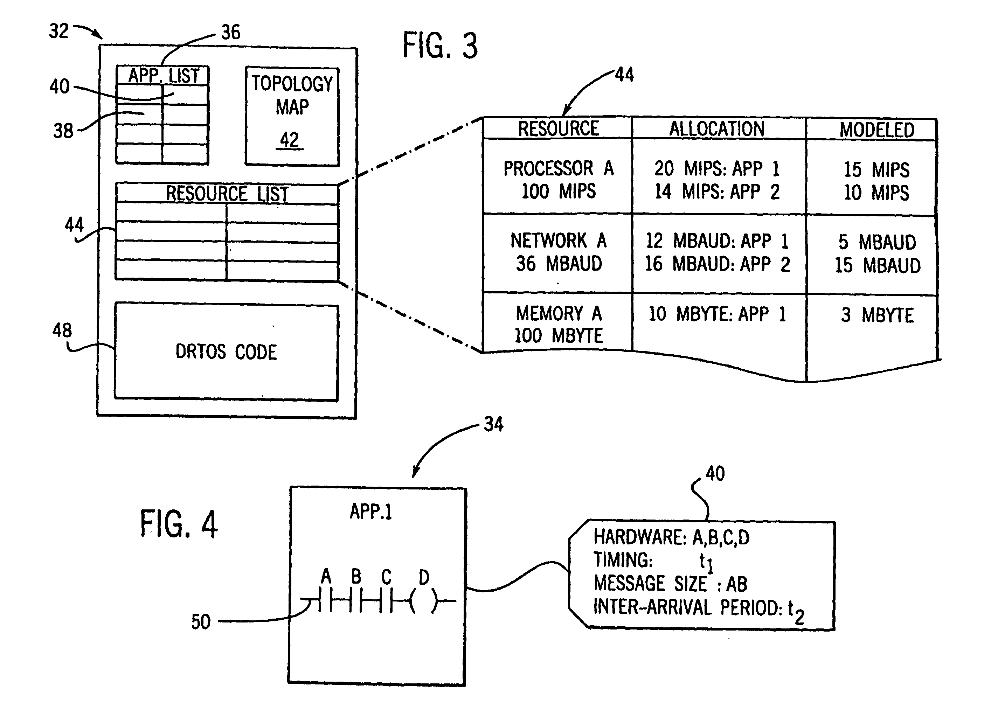

Referring now to Fig. 3, the operating system 32 collectively provides a number of resources for ensuring proper operation of the distributed control system 10. First, an application list 36 lists the application programs 34 that have been accepted for execution by the distributed control system 10. Contained in the application list 36 are application identifiers 38 and high-level requirements 40 of the application programs as will be described below.

A hardware resource list 44 provides (as depicted in a first column) a comprehensive listing of each hardware resource of the distributed control system 10 indicating a quantitative measure of that resource. For example, for the principal hardware resources of processors 26, networks 31 and memories 24, quantitative measurements may be provided in terms of millions of instructions per second (MIPS) for processors 26, numbers of megabytes for memories 24 and megabaud bandwidth for networks. While these are the principal hardware resources and their measures, it will be understood that other hardware resources may also be enrolled in this first column and other units of measures may be used. Generally, the measures are of "bandwidth" a term encompassing both an indication of the amount of data and the frequency of occurrence of the data that must be processed.

A second column of the hardware resource list 44 provides an allocation of the quantitative measure of the resource of a particular row to one or more application programs from the application list 36 identified by an application name. The application name may match the application identifier 38 of the application list 36 and the indicated allocation quantitative measure will typically be a portion of the quantitative measure of the first column.

A third column of the hardware resource list 44 provides an actual usage of the hardware resource by the application program as may be obtained by collecting statistics during running of the application programs. This measure will be statistical in nature and may be given in the units of the quantitative measure for the hardware resource provided in the first column.

The operating system 32 also includes a topology map 42 indicating the connection of the nodes 12a, 12b and 12c through the network 31 and the location of the hardware resources of the hardware resource list 44 in that topology.

Finally, the operating system also includes an operating system code 48 such as may read the application list 36, the topology map 42, and the hardware resource list 44 to ensure proper operation of the distributed control system 10.

Referring now to Fig. 4, each application program enrolled in the application list 36 is associated with high-level requirements 40 which will be used by the operating system code 48. Generally, these high-level requirements 40 will be determined by the programmer based on the programmer's knowledge of the controlled process 16 and its requirements.

Thus, for the application described above with respect to Fig. 1 the application program 34 may include a single ladder rung 50 (shown in Fig. 4) providing for the logical ANDing of inputs A, B and C to produce an output D. The high-level requirements 40 would include hardware requirements for inputs and outputs A, B, C and D. The high-level requirements 40 may further include "completion-timing constraints" t₁ indicating a constraint in execution time of the application program 34 needed for real-time control. Generally the completion-timing constraint is a maximum period of time that may elapse between occurrences of the last of inputs A, B and C to become logically true and the occurrence of the output signal D. This simple ladder logic program will be used to explain the operation of the present invention, however, it will be understood that the present invention is equally applicable to other types of application program languages such as function block languages in which timing signals and data are passed among function blocks.

The high-level requirements 40 may also include a message size, in this case the size of a message AB which must be sent over the network 31, or this may be deduced automatically through use of the topology map 42 and an implicit allocation of the hardware.

Finally, the high-level requirements 40 include an" inter-arrival period" t₂ reflecting an assumption about the statistics of the controlled process 16a in demanding execution of the application program 34. As a practical matter the inter-arrival period t₂ has not to be greater than the scanning period of the input circuitry 20a and 20c which may be less than the possible bandwidth of the signals A, B and C but which will provide acceptable real-time response.

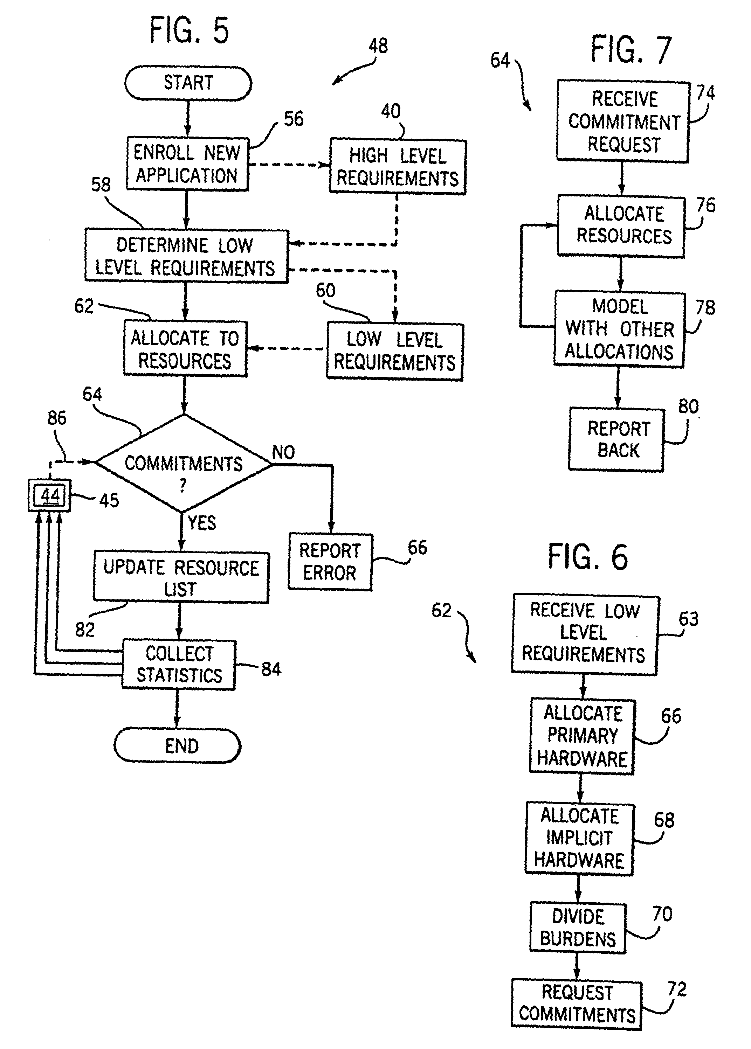

Referring now to Fig. 5, the operating system code 48 ensures proper operation of the distributed control system 10 by checking that each new enrolled application program 34 will operate acceptably with the available hardware resources. Prior to any new application program 34 being added to the application list 36, the operating system code 48 intervenes so as to ensure the necessary hardware resources are available and to ensure that time guarantees may be provided for execution of the application program.

At process block 56 the operating system code 48 checks that the high-level requirements 40 have been identified for the application program. This identification may read a prepared file of the high-level requirements 40 or may solicit the programmer to input the necessary information about the high-level requirements 40 through a menu structure or the like, or may be semiautomatic involving a review of the application program 34 for its use of hardware resources and the like. As shown and described above with respect to Fig. 4, principally four high-level requirements are anticipated, that of hardware requirements, completion-timing constraints, message sizes, and the inter-arrival period. Other high-level requirements are possible including the need for remote system services, the type of priority of the application, etc.

Referring still to Fig. 5, as indicated by process block 58, the high-level requirements 40 are used to determine low-level requirements 60. These low-level requirements may be generally "bandwidths" of particular hardware components such as are listed in the first column of the hardware resource list 44. Generally, the low-level requirements will be a simple function of high-level requirements 40 and the objective characteristics of the application program 34, the function depending on a priori knowledge about the hardware resource. For example, the amount of memory will be a function of the application program size whereas, the network bandwidth will be a function of the message size and the inter-arrival period t₂, and the processor bandwidth will be a function of the application program size and the inter-arrival period t₂ as will be evident to those of ordinary skill in the art. As will be seen, it is not necessary that the computation of the low-level requirements 60 be precise so long as it is a conservative estimate of low-level resources required.

The distinction between high-level requirements 40 and low-level requirements 60 is not fixed and in fact some high-level requirements, for example message size, may in fact be treated as low-level requirements as deduced from the topology map 42 as has been described.

Once the low-level requirements 60 have been determined, at process block 62, they are allocated to particular hardware elements distributed in the control system 10. Referring also to Fig. 6, the process block 62 includes sub-process block 63 where the low-level requirements abstracted at process block 58 are received. At process block 66 end nodes 12a and 12c are identified based on their hardware links to inputs A, B and C and output D and a tentative allocation of the application program 34 to those nodes and an allocation of necessary processor bandwidth is made to these principal nodes 12a and 12c. Next at process block 68, with reference to the topology map 42, the intermediary node 12b is identified together with necessary network 31 and an allocation is made of network space based on message size and the inter-arrival period.

The burden of storing and executing the application program is then divided at process block 70, allocating to each of memories 24a and 24c (and possibly 24b) a certain amount of space for the application program 34 and to processors 26a and 26c (and possibly 26b) a certain amount of their bandwidth for the execution of the portions of the application program 34 based on the size of the application program 34 and the inter-arrival period t₂. Network cards 28a, 28b', 28b and 28c also have allocations to them based on the message size and the inter-arrival period t₂. Thus, generally the allocation of the application program 34 can include intermediate nodes 12b serving as bridges and routers where no computation will take place. For this reason, instances or portions of the operating system code 48 will also be associated with each of these implicit hardware resources.

There are a large number of different allocative mechanisms, however, in the preferred embodiment the application program is divided according to the nodes associated with its inputs per United States Patent 5,896,289 to Struger issued Apr. 20, 1999 and entitled: "Output Weighted Partitioning Method For A Control Program In A Highly Distributed Control System" assigned to the same assignee as the present invention.

During this allocation of the application program 34, the completion-timing constraint t₁ for the application program 34 is divided among the primary hardware to which the application program 34 is allocated and the implicit hardware used to provide for communication between the possibly separated portions of the application program 34. Thus, if the completion-timing constraint t₁ is nine milliseconds, a guaranty of time to produce an output after necessary input signals are received, then each node 12a-c will receive three milliseconds of that allocation as a time obligation.

At process block 72, a request for a commitment based on this allocation including the allocated time obligations and other low-level requirements 60 is made to portions of the operating system code 48 associated with each hardware element.

At decision block 64 portions of the operating system code 48 associated with each node 12a-c and their hardware resources review the resources requested of them in processor, network, and memory bandwidth and the allocated time obligations and reports back as to whether those commitments may be made keeping within the allocated time obligation. If not an error is reported at process block 66. Generally, it is contemplated that code portions responsible for this determination will reside with the hardware resources which they allocate and thus may be provided with the necessary models of the hardware resources by the manufacturers.

This commitment process is generally represented by decision block 64 and is shown in more detail in Fig. 7 having a first process block 74 where commitment request is received designating particular hardware resources and required bandwidths. At process block 76 the portion of the operating system code 48 associated with the hardware element allocates the necessary hardware portion from hardware resource list 44 possibly modeling it as shown in process block 78 with the other allocated resources of the resource list representing previously enrolled application programs 34 to see if the allocation can be made. In the case of the static resources such as memory, the allocation may simply be a checking of the hardware resource list 44 to see if sufficient memory is available. In dynamic resources such as the processors and the network the modeling may determine whether scheduling may be performed such as will allow the necessary completion-timing constraints t₁ given the inter-arrival period t₂ of the particular application and other applications. Generally the modeling will take into account the priority of the tasks, the bandwidth required by the tasks and the expected arrival pattern of the tasks.

At the conclusion of the modeling and resource allocation, including adjustments that may be necessary from the modeling at process block 80, a report is made back to the other components of the operating system code 48. If that report is that a commitment may be had for all hardware resources of the high-level requirements 40 then the program proceeds to process block 82 instead of process block 66 representing the error condition as has been described.

At process block 82, a master hardware resource list 44 is updated and the application program is enrolled in the application list 36 to run.

During execution of the application program 34 and as indicated by process block 84, statistics are collected on its actual bandwidth usage for the particular hardware resources to which it is assigned and the actual arrival patterns. These are stored in the third column of the hardware resource list 44 shown in Fig. 3 and is shown in the block 45 associated with Fig. 5 and may be used to change the amount of allocation to particular application programs 34, indicated by arrow 86, so as to improve hardware resource utilization and modeling of that resource utilization.

The inventional concept can be summarized as follows:

An operating system for distributed industrial controllers ensures the completion of enrolled application programs within a predetermined time span as is required for robust industrial control by preallocating dynamic and static hardware resources on a per application basis and in a manner that ensures execution of the application within the necessary time constraints. Portions of the distributed operating system may be distributed at particular hardware resources to provide necessary modeling for those hardware resources in making the commitments to resource bandwidths.

## Claims

1. A distributed real-time operating system for use with a control system having spatially separated control hardware resources arranged in a topology of spatially separated processing nodes (12a, 12b, 12c) each having a memory (24a-c) and a processor (26a-c), the operating system (32) comprising:
(a) an application list (36) indicating control application programs (34) that have been accepted for execution by the distributed control system, completion-timing constraints indicating a constraint in execution time for the execution of a control application program (34) needed for real time control, and control hardware resources required by the control application programs;
(b) a resource list (44) indicating control hardware resources and their allocation among accepted control application programs;
(c) an allocation program (62) executing to pre-allocate dynamic and static hardware resources on a per application basis and in a manner that ensures execution of a received new application program (34) within necessary time constraints by:
(i) identifying control hardware resources from the resource list (44) matching control hardware resources required by the new control application program (34); and
(ii) allocating a portion of the completion-timing constraint to each identified control hardware resource;
(d) a commitment program (64) for reviewing the hardware resources and time obligations allocated by the allocation program (62) and executing to:
(iii) receive a commitment request (74);
(iv) for each of the identified control hardware resources, model (76) execution of the new control application program (34) with other control application programs on the application list (36) to ensure the associated portion of the completion-timing constraints of the new control application program are met;
(v) enrolling (82) the new control application program on the application list if all portions of the completion-timing constraints are met and otherwise reporting (66) an error; and
(vi) updating the resource list (44).

2. The distributed real-time operating system of claim 1 wherein during pre-allocation, completion-timing constraints (t₁) for the application program are divided among the spatially separated processing nodes (12a, 12b, 12c).

3. The distributed real-time operating system of claim 1 or 2 wherein the operating system further comprises a network topology map (42) indicating the topology of interconnections of the control hardware resources and wherein steps (i), (ii) and (iv) are modified in the following manner:
(i a) identifying primary control hardware resource from the resource list (44) matching control hardware resources required by the new control application program (34);
(i b) identifying implicit control hardware resource for intercommunication between primary control hardware resources from the resource list (44) required based on necessary intercommunication between the identified primary control hardware resource per network topology;
(ii) allocating a portion of the completion-timing constraint to each identified primary and implicit control hardware resource;
(iv) for each of the identified primary and implicit control hardware resource, model (76) execution of the new control application program (34) with other control application programs on the application list (36) to ensure the associated portion of the completion-timing constraints of the new control application program are met.

4. The distributed real-time operating system of claim 1,2 or 3 wherein the control application program (34) provides an output signal (D) to controlled equipment based on an input signal (A,B,C) from controlled equipment and wherein the completion-timing constraints (t₁) indicate a maximum elapsed time after occurrence of the input signal until production of the output signal.

5. The distributed real-time operating system of any preceding claim wherein the commitment program (64) models the execution of the new control application program (34) with other control application programs on the application list (36) based on a predetermined pattern of repeated execution of the new application program and wherein the commitment program further:
(vii) collects statistics of the execution of the new application program (34) during execution to modify the predetermined pattern of repeated execution for modeling with later new application programs.

6. The distributed real-time operating system of
any preceding claim wherein the resource list (44) includes control hardware resources selected from the group consisting of:
processors, memory, and communication networks.

7. The distributed real-time operating system of
any preceding claim wherein the hardware resources may be shared by scheduling and wherein the resource list (44) includes a scheduling of the hardware resource among control application programs and wherein the commitment program (64) models the schedules of the control application programs (34).

8. The distributed real-time operating system of
any preceding claim wherein the modeling of the execution of the new control application program (34) with other control application programs on the application list (36) is for each hardware resource at the spatial location of the hardware resource.

## Patentansprüche

1. Verteiltes Echtzeitbetriebssystem zur Verwendung mit einem Steuersystem, das räumlich getrennte Steuerhardware-Ressourcen aufweist, die in einer Topologie räumlich getrennter Verarbeitungsknoten (12a, 12b, 12c) angeordnet sind, von denen jeder einen Speicher (24a-c) und einen Prozessor (26a-c) aufweist, wobei das Betriebssystem (32) aufweist:
(a) eine Anwendungsliste (36), die Steueranwendungsprogramme (34) anzeigt, die zur Ausführung durch das verteilte Steuersystem akzeptiert worden sind, Beendigungszeitpunktbegrenzungen, die eine Begrenzung der Ausführungszeit für die Ausführung eines Steueranwendungsprogramms (34) anzeigen, die für die Echtzeitsteuerung erforderlich ist, und Steuerhardware-Ressourcen, die durch die Steueranwendungsprogramme benötigt werden;
(b) eine Ressourcenliste (44), die Steuerungshardware-Ressourcen und ihre Zuordnung zu akzeptierten Steueranwendungsprogrammen anzeigt;
(c) ein Zuordnungsprogramm (62), das ausgeführt wird, um dynamische und statische Hardware-Ressourcen auf Anwendungsgrundlage sowie derart vorab zuzuordnen, dass die Ausführung eines empfangenen neuen Anwendungsprogramms (34) innerhalb erforderliche Zeitpunktbegrenzungen gewährleistet ist, durch:
(i) Identifizieren von Steuerhardware-Ressourcen aus der Ressourcenliste (44) zur Anpassung von Steuerhardware-Ressourcen, die durch das neue Steueranwendungsprogramm (34) benötigt werden; und
(ii) Zuordnen eines Abschnitts der Beendigungszeitpunktbegrenzung zu jeder identifizierten Steuerhardware-Ressource;
(d) ein Festschreibungsprogramm (64) zum Beurteilen der Hardware-Ressourcen und von Zeitobligationen, die durch Zuordnungsprogramm (62) zugeordnet werden, und das ausgeführt wird, um:
(iii) Eine Festschreibungsanforderung (74) zu empfangen;
(iv) für jede der identifizierten Steuerhardware-Ressourcen die Ausführung des neuen Steueranwendungsprogramms (34) mit anderen Steueranwendungsprogrammen in der Anwendungsliste (36) zu modellieren (76), um sicherzustellen, dass der zugeordnete Abschnitt der Beendigungszeitpunktbegrenzungen des neuen Steueranwendungsprogramms erfüllt ist;
(v) das neue Steueranwendungsprogramm in der Anwendungsliste einzutragen, wenn sämtliche Abschnitte der Beendigungszeitpunktbegrenzungen erfüllt sind, und um anderweitig einen Fehler zu berichten (66); und
(vi) Aktualisieren der Ressourcenliste (44).

2. Verteiltes Echtzeitbetriebssystem nach Anspruch 1, wobei während der vorausgehenden Zuordnung Beendigungszeitpunktbegrenzungen (t₁) für das Anwendungsprogramm auf die räumlich getrennten Verarbeitungsknoten (12a, 12b, 12c) aufgeteilt werden.

3. Verteiltes Echtzeitbetriebssystem nach Anspruch 1 oder 2, wobei das Betriebssystem außerdem eine Netzwerktopologietabelle (42) umfasst, die die Topologie der gegenseitigen Verbindungen der Steuerhardware-Ressourcen anzeigt, und wobei die Schritte (i), (ii) und (iv) in der folgenden Weise modifiziert werden:
(ia) Identifizieren einer primären Steuerhardware-Ressource aus der Ressourcenliste (44) zur Anpassung von Steuerhardware-Ressourcen, die durch das neue Steueranwendungsprogramm (34) benötigt werden;
(i b) Identifizieren einer impliziten Steuerhardware-Ressource zur gegenseitigen Verbindung zwischen primären Steuerhardware-Ressourcen aus der Ressourcenliste (44), die erforderlich sind auf Grundlage einer notwendigen Interkommunikation zwischen der identifizierten primären Steuerhardware-Ressource pro Netzwerktopologie;
(ii) Zuordnen eines Abschnitts der Beendigungszeitpunktbegrenzung zur jeweiligen identifizierten primären und impliziten Steuerhardware-Ressource;
(iv) für die jeweilige identifizierte primäre und implizite Steuerhardware-Ressource, Modellieren (76) die Ausführung des neuen Steueranwendungsprogramms (34) mit anderen Steueranwendungsprogrammen in der Anwendungsliste (36), um sicherzustellen, dass der zugeordnete Abschnitt der Beendigungszeitpunktbegrenzungen des neuen Steueranwendungsprogramms erfüllt ist.

4. Verteiltes Echtzeitbetriebssystem nach Anspruch 1, 2 oder 3, wobei das Steueranwendungsprogramm (34) ein Ausgangssignal (D) der gesteuerten Anlage auf Grundlage eines Eingangssignals (A, B, C) von der gesteuerte Anlage bereitstellt, und wobei die Beendigungszeitpunktbegrenzungen (t₁) eine maximale abgelaufene Zeit nach Auftreten des Eingangssignals anzeigen bis zur Erzeugung des Ausgangssignals.

5. Verteiltes Echtzeitbetriebssystem nach einem der vorangehenden
Ansprüche, wobei das Festschreibungsprogramm (64) die Ausführung des neuen Steueranwendungsprogramms (34) mit anderen Steueranwendungsprogrammen in der Anwendungsliste (36) auf Grundlage eines vorbestimmten Musters einer wiederholten Ausführung des neuen Anwendungsprogramms modelliert, und wobei das Festschreibungsprogramm außerdem:
(vii) Statistiken bezüglich der Ausführung des neuen Anwendungsprogramms (34) während der Ausführung sammelt, um das vorbestimmte Muster der wiederholten Ausführung zu modellieren und mit späteren neuen Anwendungsprogramm zu modifizieren.

6. Verteiltes Echtzeitbetriebssystem nach einem der vorangehenden Ansprüche, wobei die Ressourcenliste (44) Steuerhardware-Ressourcen enthält, die aus der Gruppe ausgewählt sind, die besteht aus Prozessoren, Speichern und Kommunikationsnetzwerken.

7. Verteiltes Echtzeitbetriebssystem nach einem der vorangehenden Ansprüche, wobei die Hardware-Ressourcen durch Planen aufgeteilt werden können, und wobei die Ressourcenliste (44) eine Planung der Hardware-Ressource unter Steueranwendungsprogrammen enthält, und wobei das Festschreibungsprogramm (64) die Pläne der Steueranwendungsprogramme (34) modelliert.

8. Verteiltes Echtzeitbetriebssystem nach einem der vorangehenden Ansprüche, wobei die Modellierung der Ausführung des neuen Steueranwendungsprogramms (34) mit anderen Steueranwendungsprogrammen in der Anwendungsliste (36) für jede Hardware-Ressource am räumlichen Ort der Hardware-Ressource vorgenommen wird.

## Revendications

1. Système d'exploitation en temps réel réparti destiné à être utilisé avec un système de commande ayant des ressources de matériel de commande séparées dans l'espace, agencées dans une topologie de noeuds de traitement séparés dans l'espace (12a, 12b, 12c) ayant chacun une mémoire (24a-c) et un processeur (26a-c), système d'exploitation (32) comprenant :
(a) une liste d'applications (36) indiquant des programmes d'application de commande (34) qui ont été acceptés pour l'exécution par le système de commande réparti, des contraintes d'achèvement-synchronisation indiquant une contrainte en temps d'exécution pour l'exécution d'un programme d'application de commande (34) nécessaire pour une commande en temps réel et des ressources de matériel de commande nécessaires pour les programmes d'application de commande ;
(b) une liste de ressources (44) indiquant des ressources de matériel de commande et leur allocation parmi des programmes d'application de commande acceptés ;
(c) un programme d'allocation (62) exécutant pour des ressources de matériel dynamiques et statiques préalablement allouées sur une base par application et d'une manière qui garantit une exécution d'un nouveau programme d'application reçu (34) dans des contraintes de temps nécessaires en :
(i) identifiant des ressources de matériel de commande à partir de la liste de ressources (44) s'adaptant à des ressources de matériel de commande nécessaires pour le nouveau programme d'application de commande (34) ; et
(ii) allouant une partie de la contrainte d'achèvement-synchronisation à chaque ressource de matériel de commande identifiée ;
(d) un programme d'engagement (64) pour réviser les ressources de matériel et les obligations de temps allouées par le programme d'allocation (62) et exécuter pour :
(iii) recevoir une demande d'engagement (74) ;
(iv) pour chacune des ressources de matériel de commande identifiées, modéliser (76) une exécution du nouveau programme d'application de commande (34) avec d'autres programmes d'application de commande sur la liste d'applications (36) pour garantir que la partie associée des contraintes d'achèvement-synchronisation du nouveau programme d'application de commande soit satisfaite ;
(v) inscrire (82) le nouveau programme d'application de commande sur la liste d'applications si toutes les parties des contraintes d'achèvement-synchronisation sont satisfaites et sinon rapporter (66) une erreur ; et
(vi) actualiser la liste de ressources (44).

2. Système d'exploitation en temps réel réparti selon la revendication 1, dans lequel durant l'allocation préalable, les contraintes d'achèvement-synchronisation (t₁) pour le programme d'application sont divisées entre les noeuds de traitement séparés dans l'espace (12a, 12b, 12c).

3. Système d'exploitation en temps réel réparti selon la revendication 1, dans lequel le système d'exploitation comprend en outre une table de topologie de réseau (42) indiquant la topologie d'interconnexions des ressources de matériel de commande et dans lequel les étapes (i), (ii) et (iv) sont modifiées de la manière suivante :
(ia) identifier une ressource de matériel de commande principale à partir de la liste de ressources (44) s'adaptant aux ressources de matériel de commande nécessaires pour le programme d'application de commande (34) ;
(ib) identifier une ressource de matériel de commande implicite pour une intercommunication entre les ressources de matériel de commande principales provenant de la liste de ressources (44) nécessaires sur la base d'une intercommunication nécessaire entre la ressource de matériel de commande principale par topologie de réseau ;
(ii) allouer une partie de la contrainte d'achèvement-synchronisation à chaque ressource de matériel de commande principale et implicite identifiée ;
(iv) pour chacune ressource de matériel de commande principale et implicite identifiée, modéliser (76) une exécution du nouveau programme d'application de commande (34) avec d'autres programmes d'application de commande sur la liste d'applications (36) pour garantir que la partie associée des contraintes d'achèvement-synchronisation du nouveau programme d'application de commande soit satisfaite.

4. Système d'exploitation en temps réel réparti selon la revendication 1, 2 ou 3, dans lequel le programme d'application de commande (34) fournit un signal de sortie (D) à un équipement commandé sur la base d'un signal d'entrée (A, B, C) provenant de l'équipement commandé et dans lequel les contraintes d'achèvement-synchronisation (t₁) indiquent un temps écoulé maximal après l'apparition du signal d'entrée jusqu'à la génération du signal de sortie.

5. Système d'exploitation en temps réel réparti selon l'une quelconque des revendications précédentes, dans lequel le programme d'engagement (64) modélise l'exécution du nouveau programme d'application de commande (34) avec d'autres programmes d'application de commande sur la liste d'applications (36) sur la base d'un schéma prédéterminé d'exécutions répétées du nouveau programme d'application et dans lequel le programme d'engagement, en outre :
(vii) collecte des statistiques de l'exécution du nouveau programme d'application (34) durant l'exécution pour modifier le schéma prédéterminé d'exécution répétée pour une modélisation avec de nouveaux programmes d'application ultérieurs.

6. Système d'exploitation en temps réel réparti selon l'une quelconque des revendications précédentes, dans lequel la liste de ressources (44) comprend des ressources de matériel de commande provenant du groupe composé de : processeurs, mémoire et réseaux de communication.

7. Système d'exploitation en temps réel réparti selon l'une quelconque des revendications précédentes, dans lequel les ressources de matériel peuvent être partagées par détermination de l'ordre de priorité et dans lequel la liste de ressources (44) comprend une détermination de l'ordre de priorité de la ressource de matériel parmi des programmes d'application de commande et dans lequel le programme d'engagement (64) modélise les déterminations de l'ordre de priorité des programmes d'application de commande (34).

8. Système d'exploitation en temps réel réparti selon l'une quelconque des revendications précédentes, dans lequel la modélisation de l'exécution du nouveau programme d'application de commande (34) avec d'autres programmes d'application de commande sur la liste d'applications (36) est pour chaque ressource de matériel au niveau de la position spatiale de la ressource de matériel.
